# EUROPÄISCHE PATENTSCHRIFT

(11) **EP 3 178 203 B1**
(45) Veröffentlichungstag und Bekanntmachung des Hinweises auf die Patenterteilung: **09.09.2020**
(21) Anmeldenummer: 15739237.4
(22) Anmeldetag: 14.07.2015
(51) Int. Cl.: H04L 12/40, H04L 25/02

(54) **TEILNEHMERSTATION FÜR EIN BUSSYSTEM UND VERFAHREN ZUR BREITBANDIGEN CAN-KOMMUNIKATION**
PARTICIPANT STATION FOR A BUS SYSTEM AND METHOD FOR BROADBAND CAN-BUS COMMUNICATION
POSTE UTILISATEUR POUR SYSTÈME DE BUS ET PROCÉDÉ DE LARGE BANDE CAN-BUS COMMUNICATION

(30) Priorität: 05.08.2014 DE 102014215465
(43) Veröffentlichungstag der Anmeldung: 14.06.2017
(73) Patentinhaber: Robert Bosch GmbH, 70442 Stuttgart (DE)
(72) Erfinder: NICKEL, Patrick, 63633 Birstein (DE)
(86) Internationale Anmeldenummer: PCT/EP2015/066056
(87) Internationale Veröffentlichungsnummer: WO 2016/020155

(56) Entgegenhaltungen:
- EP-A1- 0 851 636
- EP-A2- 0 169 548
- DE-A1-102012 220 488
- US-A1- 2004 085 917

## Beschreibung

### Technisches Gebiet

Die vorliegende Erfindung betrifft eine Teilnehmerstation für ein Bussystem und ein Verfahren zur breitbandigen CAN-Kommunikation, bei welchen eine Kommunikation in einem CAN Bussystem für höhere Geschwindigkeiten über CAN-FD hinaus möglich ist und bei welchem die erforderliche Zeit zur Bestimmung der Kanalzustandsinformationen verkürzt ist.

### Stand der Technik

Für die Kommunikation zwischen Sensoren und Steuergeräten hat das CAN-Bussystem eine weite Verbreitung gefunden. Beispielsweise wird es in Automobilen eingesetzt. Beim CAN-Bussystem werden Nachrichten mittels des CAN-Protokolls übertragen, wie es in der CAN-Spezifikation in der ISO11898 beschrieben ist. Insbesondere automobile Bussysteme entwickeln sich kontinuierlich zu höheren Bandbreiten, niedrigeren Latenzzeiten und strengerer Echtzeitfähigkeit. In jüngerer Zeit wurden hierfür zudem Techniken vorgeschlagen, wie beispielsweise CAN-FD, bei welchem Nachrichten entsprechend Spezifikation "CAN with Flexible Data-Rate, Specification Version 1.0" (Quelle http://www.semiconductors.bosch.de) übertragen werden, usw. Bei solchen Techniken wird die maximal mögliche Datenrate durch Einsatz einer höheren Taktung im Bereich der Datenfelder über einen Wert von 1 MBit/s hinaus gesteigert.

Die Erweiterung des CAN-Standards wurde neben vorrangig funktionalen Ergänzungen, wie z.B. TTCAN, in jüngerer Zeit mit CAN-FD besonders hinsichtlich der möglichen (höheren) Datenrate und der nutzbaren Datenpaketgröße erweitert, wobei die ureigenen CAN-Eigenschaften besonders in Form der Arbitrierung erhalten wurden. Weiterhin wurde die Signaldarstellung im Datenteil im Wesentlichen durch eine höhere Schaltfrequenz der Signalzustände (high/low = hoch/niedrig) geändert.

Die DE 10 2009 026 961 A1 bezieht sich auf ein Verfahren zum Übertragen von Daten zwischen Teilnehmerstationen eines Bussystems. Hier ist eine Erweiterung des existierenden CAN-Signals und der zugehörigen Kommunikationseinrichtung hinsichtlich der Nutzung hochfrequenter Signale beschrieben, welche in beliebiger Form, beispielsweise zeitlich parallel oder eingebettet, zu einem CAN-Datenstrom auf die Busleitung geprägt wird. Hierbei wird besonders eine Abstimmung des Signals, sei es Synchronisationssignal, Triggersignal, mit dem CAN-Signal vorgeschlagen.

Um das CAN Bussystem zu höheren Geschwindigkeiten über CAN-FD hinaus weiterzuentwickeln, existieren Konzepte für die entsprechende Auslegung und Umsetzung der physikalischen Schicht (Physical Layer). Hierzu wird bei einer CAN-basierten Kommunikation die gesendete Information auf einem Kommunikationsbus von mehreren Empfängern gleichzeitig empfangen, welche im Allgemeinen an verschiedenen Stellen des Kommunikationsbusses an die Leitung angeschlossen sind.

Bei Einsatz von hochratiger Kommunikation, wie beispielsweise im mittleren Rahmenteil eines CAN-Rahmens, also zwischen Rahmenkopf und Rahmenende, entstehen Verzerrungen in Form von z.B. Intersymbolinterferenzen (ISI) im Empfangssignal.

EP 0 851 636 A1 offenbart ein Kommunikationsnetzwerk mit mehreren Teilnehmern, die einen gemeinsamen Kommunikationskanal teilen, bei dem vor Übertragung der eigentlichen Nachrichtenpakete nachrichtenspezifischen Trainingssequenzen versendet werden. Der Kommunikationskanal wird hierbei in Zeitschlitze aufgeteilt, um ein effizientes Versenden zu ermöglichen.

EP 0 169 548 A2 offenbart ein Master-Slave-Kommunikationsnetzwerk, bei dem teilnehmerspezifische Operationsparameter für die Kommunikation mit jedem Slave ermittelt und im Master abgelegt werden. Die Parameter werden für die weitere Kommunikation zwischen Master und dem jeweiligen Slave verwendet.

US 2004/0085917 offenbart ein Kommunikationsnetzwerk mit mehreren Teilnehmern, die einen gemeinsamen Kommunikationskanal teilen, bei dem Trainingssequenzen versendet werden, um Kanalinformationen zu ermitteln und in einem adaptiven Filter zu nutzen.

DE 10 2012 220 488 A1 offenbart ein Bussystem mit mehreren Teilnehmern, bei dem eine Kanalimpulsantwort geschätzt wird und zur Korrektur von empfangenen Signalen genutzt wird.

Für einen robusten Empfang benötigt ein Empfänger Informationen über den Kanalzustand in Form von aktueller Impulsantwort und vorliegenden Störgrößen. Diese Größen hängen im Allgemeinen von der aktuellen Sender-Empfänger-Paarung ab, so dass z.B. die Impulsantwort auf jedem Empfangspfad (verschiedene Sender) für einen Empfänger bekannt sein muss, damit die Nachricht durch Einsatz von Entzerrung robust, im Sinne von hinreichend fehlerfrei, detektiert werden kann. Bei N Teilnehmern TN im Netzwerk existieren i.A. N^{∗}(N-1)/2 unterschiedliche Impulsantworten. Dies begründet sich auf der Tatsache, dass jede Verbindung zwischen zwei Teilnehmern TN eine i.A. unterschiedliche Impulsantwort besitzt, wobei diese zu einem Zeitpunkt richtungsunabhängig, also für Sender TN 1 -> Empfänger TN 2 und Sender TN 2 -> Empfänger TN 1, die gleiche Form besitzt (Reziprozität).

Üblicherweise sind die benötigten Größen zur Kanalcharakterisierung, insbesondere die Kanalimpulsantworten, nicht initial bekannt und auf der Seite eines jeden Empfängers vorhanden. Daher müssen diese, u.a. aufgrund von Temperatureffekten, in regelmäßigen Abständen neu geschätzt bzw. angepasst werden. Für die Schätzung sendet ein Teilnehmer z.B. eine auf allen Seiten bekannte Trainingssequenz, aus deren Empfangssignal die entsprechende Kanalimpulsantwort geschätzt werden kann. Dies kann gleichzeitig an mehreren Empfangsstellen geschehen, so dass im Allgemeinen die Aussendung von N (orthogonalen) Sequenzen zur Charakterisierung des gesamten Netzwerks ausreicht.

Denkbar ist, die Trainingssequenz z.B. im Rahmenkopf des CAN-Rahmens unterzubringen. Problematisch daran ist jedoch, dass die Aussendung der Trainingssequenz ca., 5 - 25% der zeitlichen Dauer eines CAN-Rahmens benötigt. Dadurch verringert sich die Nettodatenrate des Gesamtsystems im Vergleich zur Bruttodatenrate entsprechend, da die für die Aussendung der Trainingssequenz verwendete Zeit nicht für eine Datenübertragung genutzt werden kann. Dieses Problem wird vor allem in Systemen mit wenigen Teilnehmern bzw. Teilnehmerstationen besonders eklatant.

### Offenbarung der Erfindung

Daher ist es Aufgabe der vorliegenden Erfindung, eine Teilnehmerstation für ein Bussystem und ein Verfahren bereitzustellen, welche die zuvor genannten Probleme lösen. Insbesondere sollen eine Teilnehmerstation für ein Bussystem und ein Verfahren bereitgestellt werden, welche eine Weiterentwicklung der CAN-Signalstrukturen und notwendigen Kommunikationseinrichtungen zu höheren Datenraten ermöglichen und die erforderliche Zeit zur Bestimmung der Kanalzustandsinformationen minimieren.

Die Aufgabe wird durch eine Teilnehmerstation für ein Bussystem mit den Merkmalen des Anspruchs 1 gelöst. Die Teilnehmerstation umfasst eine Kommunikationssteuereinrichtung zum Erstellen oder Lesen zumindest einer Nachricht für/von mindestens eine/r weiteren Teilnehmerstation des Bussystems, bei welchem zumindest zeitweise ein exklusiver, kollisionsfreier Zugriff einer Teilnehmerstation auf eine Busleitung des Bussystems gewährleistet ist, wobei die Kommunikationssteuereinrichtung ausgestaltet ist, Kanalzustandsinformationen gemäß einer im Bussystem für die Teilnehmerstation festgelegten zeitlichen Reihenfolge zum Senden zu erstellen, so dass die Teilnehmerstation die Kanalzustandsinformationen nicht in jeder Nachricht zu senden hat, wobei die Kanalzustandsinformationen Informationen zur Bestimmung der Kanalcharakteristik zwischen der Teilnehmerstation und der weiteren Teilnehmerstation des Bussystems umfassen, an welche die Nachricht zu senden ist.

Mit der Teilnehmerstation ist eine Nutzung von neuartigen Kommunikationsformaten im mittleren Segment des CAN-Rahmens möglich und zudem die erforderliche Zeit zur Bestimmung der Kanalzustandsinformationen minimiert.

Besonders in einem Netzwerk mit nur wenigen Teilnehmerstationen bzw. Teilnehmern wird mit dem von der Teilnehmerstation durchgeführten Verfahren die benötigte Zeit zur Schätzung der Kanalimpulsantworten deutlich verkürzt. Besonders kann die Aussendung der Trainingssequenzen teilnehmerabhängig und nicht mehr nachrichtenabhängig übertragen werden.

Darüber hinaus ist mit der Teilnehmerstation das CAN Bussystem für höhere Geschwindigkeiten über CAN-FD hinaus so weiterentwickelt, dass wesentliche Anwendungsmerkmale im Einklang zu bestehenden CAN-Prinzipien stehen. Dadurch ist ein Mischbetrieb möglich, bei welchem die für die höheren Geschwindigkeiten ausgelegten Teilnehmerstationen in gemischten Netzwerken mit bestehenden CAN-Teilnehmerstationen oder CAN-Knoten betrieben werden. Die zuvor beschriebene Teilnehmerstation ist je nach Bedarf für den Einsatz auch bei Systemen geeignet, die Datenraten über CAN-FD hinaus verarbeiten können.

Vorteilhafte weitere Ausgestaltungen der Teilnehmerstation sind in den abhängigen Patentansprüchen angegeben.

Es ist denkbar, dass die festgelegte zeitliche Reihenfolge eine vorbestimmte Zykluszeit ist, nach Ablauf welcher die Kommunikationssteuereinrichtung ausgestaltet ist, die Kanalzustandsinformationen auszusenden, und die Länge der vorbestimmten Zykluszeit derart gewählt ist, dass innerhalb der vorbestimmten Zykluszeit alle Teilnehmerstationen des Bussystems einmal die Kanalzustandsinformationen gesendet haben können, oder wobei die festgelegte zeitliche Reihenfolge zusätzlich zu der vorbestimmten Zykluszeit umfasst, dass mindestens eine Teilnehmerstation des Bussystems zum sporadischen Senden der Kanalzustandsinformationen ausgestaltet ist.

Möglicherweise ist die Kommunikationssteuereinrichtung zudem ausgestaltet zur Erstellung der Trainingssequenz innerhalb der vorbestimmten Zykluszeit, um zu realisieren, dass innerhalb dieser vorbestimmten Zykluszeit für alle Teilnehmerstationen des Bussystems einmal eine Trainingssequenz als separater Rahmen ausgesendet wird.

Bevorzugt ist die Kommunikationssteuereinrichtung zudem zum teilnehmerstationsabhängigen Senden der Kanalzustandsinformationen ausgestaltet ist, und/oder es ist möglich, dass die Kanalzustandsinformationen in einer Trainingssequenz der Nachricht enthalten sind.

Die zuvor beschriebene Teilnehmerstation kann auch eine Speichereinrichtung aufweisen zur Speicherung der Kanalzustandsinformationen, wenn die Nachricht die Kanalzustandsinformationen umfasst.

Die Kommunikationssteuereinrichtung kann auch ausgestaltet sein zu bestimmen, ob die gelesene Nachricht die Kanalzustandsinformationen aufweist, wobei eine Speichereinrichtung zur Speicherung der Kanalzustandsinformationen ausgestaltet ist, wenn die Kommunikationssteuereinrichtung bestimmt, dass die gelesene Nachricht die Kanalzustandsinformationen aufweist.

Optional ist es auch denkbar, dass die zuvor beschriebene Teilnehmerstation zudem eine Korrektureinrichtung aufweist zur Korrektur der gelesenen Nachricht anhand der Kanalzustandsinformationen, wobei die Korrektureinrichtung ausgestaltet ist, die Kanalzustandsinformationen aus einer Trainingssequenz der Nachricht oder aus einer Speichereinrichtung zu beschaffen, wenn die Nachricht keine Trainingssequenz umfasst.

Gemäß einer Ausgestaltung ist es möglich, die Nachricht neben einem Rahmenkopf und einem Rahmenende nur die Trainingssequenz als Datenteil aufweist, oder in einer anderen Ausgestaltung, dass die Trainingssequenz in einen Datenrahmen als Nachricht eingebettet ist.

Die zuvor beschriebene Teilnehmerstation kann Teil eines Bussystems sein, das zudem eine parallele Busleitung und mindestens zwei Teilnehmerstationen umfasst, welche über die Busleitung derart miteinander verbunden sind, dass sie miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur breitbandigen Kommunikation in einem Bussystem nach Patentanspruch 10 gelöst. Das Verfahren umfasst die Schritte: Erstellen oder Lesen, mit einer Kommunikationssteuereinrichtung, zumindest einer Nachricht für/von mindestens eine/r weiteren Teilnehmerstation des Bussystems, bei welchem zumindest zeitweise ein exklusiver, kollisionsfreier Zugriff einer Teilnehmerstation auf eine Busleitung des Bussystems gewährleistet ist, wobei die Kommunikationssteuereinrichtung Kanalzustandsinformationen gemäß einer im Bussystem für die Teilnehmerstation festgelegten zeitlichen Reihenfolge zum Senden erstellt, so dass die Teilnehmerstation die Kanalzustandsinformationen nicht in jeder Nachricht zu senden hat, und wobei die Kanalzustandsinformationen Informationen zur Bestimmung der Kanalcharakteristik zwischen der Teilnehmerstation und der weiteren Teilnehmerstation des Bussystems umfassen, an welche die Nachricht zu senden ist.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 eine schematische Darstellung des Aufbaus einer Nachricht bei einem Bussystem gemäß dem ersten Ausführungsbeispiel;
Fig. 3 eine Matrix zur schematischen Veranschaulichung der Unterschiedlichkeit der Kanalimpulsantworten in dem Bussystems gemäß dem ersten Ausführungsbeispiel;
Fig. 4 ein vereinfachtes Blockschaltbild einer Teilnehmerstation des Bussystems gemäß dem ersten Ausführungsbeispiel;
Fig. 5 ein Zeitverlaufsdiagramm zur Veranschaulichung einer Versendung von Nachrichten der einzelnen Teilnehmerstationen über der Zeit in dem Bussystem gemäß dem ersten Ausführungsbeispiel;
Fig. 6 ein Zeitverlaufsdiagramm zur Veranschaulichung einer Versendung von Nachrichten der einzelnen Teilnehmerstationen über der Zeit in dem Bussystem gemäß einem zweiten Ausführungsbeispiel;
Fig. 7 eine schematische Darstellung des Aufbaus einer Nachricht bei einem Bussystem gemäß dem zweiten Ausführungsbeispiel; und
Fig. 8 ein vereinfachtes Blockschaltbild einer Teilnehmerstation des Bussystems gemäß dem zweiten Ausführungsbeispiel;
Fig. 9 ein vereinfachtes Blockschaltbild einer Teilnehmerstation des Bussystems gemäß dem zweiten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

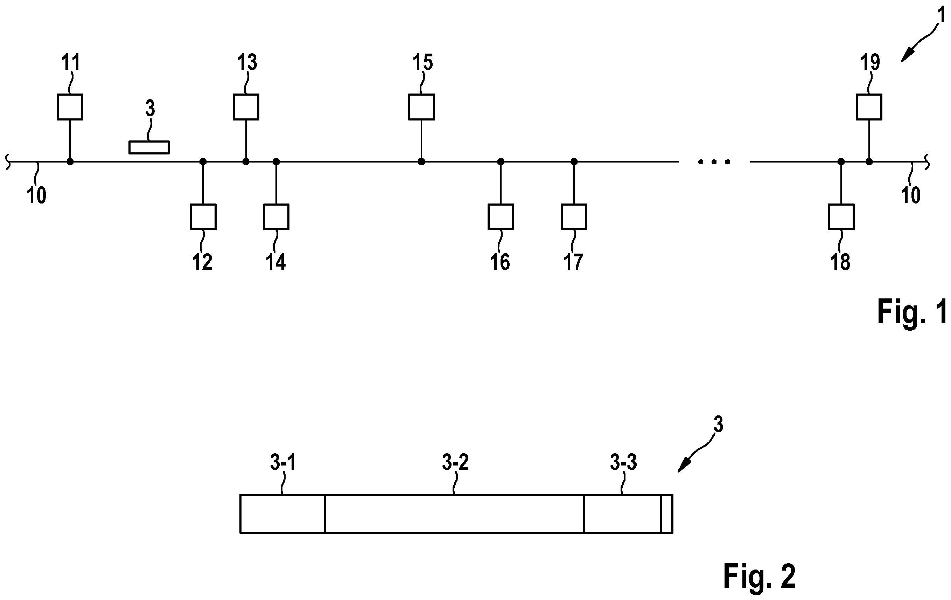

Fig. 1 zeigt ein Bussystem 1, das beispielsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 einen parallelen Bus mit einer Busleitung 10. An die Busleitung 10 sind bei dem vorliegenden Ausführungsbeispiel neun Teilnehmer in Form der Teilnehmerstationen 11 bis 19 angeschlossen. Es ist jedoch auch möglich, dass das Bussystem 1 mehr, beispielsweise zwölf oder weniger, beispielsweise fünf, Teilnehmer, hat. Über die Busleitung 10 können Nachrichten 3 in der Form von Signalen zwischen den einzelnen Teilnehmerstationen 11 bis 19 übertragen werden. Die Teilnehmerstationen 11 bis 19 können beispielsweise Steuergeräte, Sensoren, Anzeigevorrichtungen, usw. eines Kraftfahrzeugs sein.

Gemäß Fig. 2 haben die Nachrichten 3 jeweils einen Rahmenkopf 3-1, ein Datenteil 3-2 und ein Rahmenende 3-3.

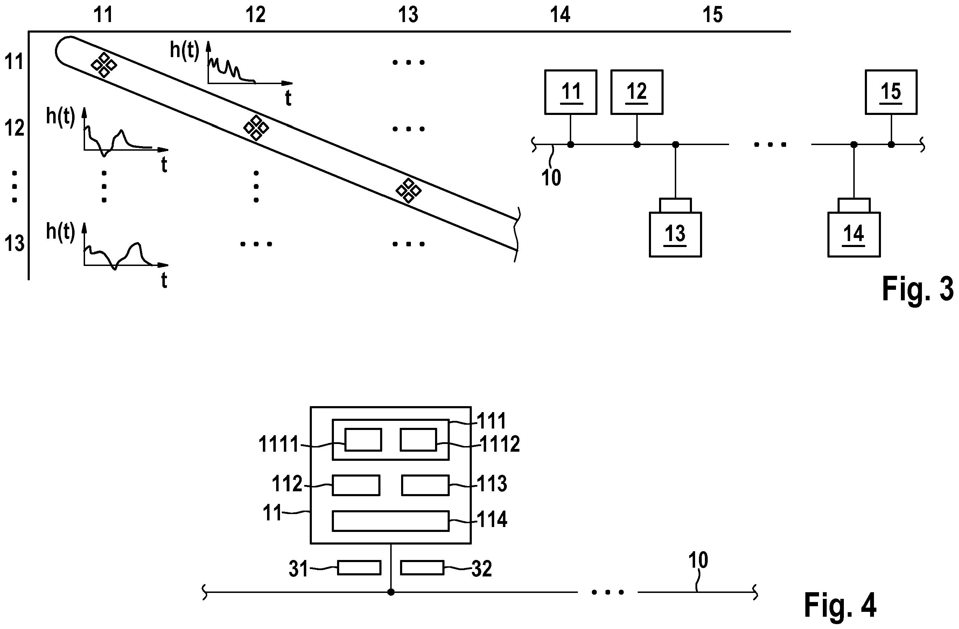

Fig. 3 zeigt die Kanalimpulsantworten h(t) des parallelen Busses von Fig. 1 als Beispiel für die Teilnehmerstationen 11 bis 15 als Teilnehmer des Bussystems 1. Wie in Fig. 3 veranschaulicht, hängt jede Kanalimpulsantwort h(t) von der Sender-Empfänger-Paarung ab. Demzufolge ist die Kanalimpulsantwort h(t) für den Fall, dass die Teilnehmerstation 11 Sender ist und die Teilnehmerstation 12 Empfänger in der Regel anders als bei dem Fall, bei welchem die Teilnehmerstation 11 Sender ist und die Teilnehmerstation 13 Empfänger. Das gleiche gilt für die anderen Sender-Empfänger-Paarungen.

Aus diesem Grund sind die Teilnehmerstationen 11 bis 19 aufgebaut, wie in Fig. 4 anhand der Teilnehmerstation 11 als Beispiel veranschaulicht.

Gemäß Fig. 4 hat die Teilnehmerstation 11 eine Kommunikationssteuereinrichtung 111, eine Speichereinrichtung 112, eine Korrektureinrichtung 113 und eine Sende-/Empfangseinrichtung 114. Die Kommunikationssteuereinrichtung 111 weist eine Datenrahmenerstelleinrichtung 1111 zur Erstellung einer einzelnen Nachricht als Datenrahmen 31 in Form eines Signals für die Busleitung 10 und eine Trainingssequenzerstelleinrichtung 1112 zur Erstellung einer einzelnen Trainingssequenz 32 in Form eines Signals für die Busleitung 10 auf.

Der Datenrahmen 31 und die Trainingssequenz 32 werden jeweils als separate Nachrichten 3 erstellt, die auf der Busleitung 10 zu übertragen sind. Zumindest der Datenrahmen 31 hat neben Rahmenkopf und Rahmenende einer üblichen Nachricht 3 ein Datenfeld, das ein hochratiges Datenformat hat, um Daten gemäß der Spezifikation für CAN-FD oder mit einer noch höheren Datenübertragungsrate zu übertragen. Der Datenrahmen 31 umfasst nur Daten, welche für den Betrieb der adressierten Teilnehmerstation gedacht sind, jedoch keine Informationen aufweisen, aus denen Kanalzustandsinformationen abzuleiten sind. Im Unterschied dazu umfasst die Trainingssequenz 32 neben Rahmenkopf und Rahmenende einer üblichen Nachricht 3 keine solchen Daten, wie sie im Datenrahmen 31 enthalten sind. Die Trainingssequenz 32 umfasst also nur Daten oder Informationen, aus denen die Kanalzustandsinformationen ableitbar sind, jedoch keine Daten, welche für den sonstigen Betrieb der adressierten Teilnehmerstation gedacht sind.

In der Speichereinrichtung 112 können die Trainingssequenzen 32 und/oder die in ihnen enthaltenen Kanalzustandsinformationen gespeichert werden, welche die Teilnehmerstation 11 bereits von einer der anderen Teilnehmerstationen 12 bis 19 empfangen hat und/oder welche die Teilnehmerstation 11 bereits selbst erstellt hat. Die Korrektureinrichtung 113 kann ein von der Sende-/Empfangseinrichtung 114 empfangenes Signal mit Hilfe der Trainingssequenz 32 entzerren und damit korrigieren. Die Sende-/Empfangseinrichtung 114 ist direkt an die Busleitung 10 angeschlossen, auch wenn dies in Fig. 4 nicht dargestellt ist.

Die Kommunikationssteuereinrichtung 111 dient zur Steuerung einer Kommunikation der Teilnehmerstation 11 über die Busleitung 10 mit einer anderen Teilnehmerstation der an die Busleitung 10 angeschlossenen Teilnehmerstationen 12 bis 19. Die Datenrahmenerstelleinrichtung 1111, die Trainingssequenzerstelleinrichtung 1112, die Speichereinrichtung 112 und die Korrektureinrichtung 113 dienen zur Übertragung der Nachrichten 3 mit hoher Datenrate auf der Busleitung 10 mit CAN-Bus-Topologie, wie später noch ausführlicher beschrieben. Die Kommunikationssteuereinrichtung 111 kann ansonsten wie ein herkömmlicher CAN-Controller ausgeführt sein. Die Sende-/Empfangseinrichtung 114 kann bis auf die nachfolgend beschriebenen Funktionen in Bezug auf ihre Sende- und Empfangsfunktionalität wie ein herkömmlicher CAN-Transceiver ausgeführt sein.

Die Teilnehmerstationen 12 bis 19 sind bei dem vorliegenden Ausführungsbeispiel auf dieselbe Weise aufgebaut wie die Teilnehmerstation 11. Daher kann mit den Teilnehmerstationen 11 bis 19 eine Bildung und dann Übertragung von Nachrichten 3 auch mit höheren Datenraten als CAN-FD realisiert werden, wobei auch bei der geringen Anzahl von Teilnehmern in dem Bussystem 1 eine gute bzw. bessere Nettodatenrate als bei einer Übertragung gemäß dem CAN-Protokoll erzielt wird.

Für die Schätzung der Kanalimpulsantwort h(t) gemäß Fig. 3 sendet beispielsweise die Teilnehmerstation 11 eine von der Trainingssequenzerstelleinrichtung 1112 erstellte Trainingssequenz 32 an alle Teilnehmerstationen 12 bis 19. Aus dem Empfangssignal der Trainingssequenz 32 kann die empfangende Teilnehmerstation der Teilnehmerstationen 12 bis 19 die entsprechenden Kanalzustandsinformationen, wie beispielsweise die Kanalimpulsantwort h(t), insbesondere mit Hilfe der Kommunikationssteuereinrichtung 111 bestimmen oder schätzen und anschließend in der Speichereinrichtung 112 speichern. Dies kann gleichzeitig an mehreren Empfangsstellen und somit Teilnehmerstationen der Teilnehmerstationen 12 bis 19 geschehen, so dass im Allgemeinen die Aussendung von N (orthogonalen) Trainingssequenzen 32 zur Charakterisierung des gesamten Bussystems 1 ausreicht.

Gemäß dem vorliegenden Ausführungsbeispiel werden die Kanalzustandsinformationen, insbesondere die Kanalimpulsantwort h(t), nicht mit jeder CAN-Nachricht 3 neu bestimmt. Dies ist möglich, da sich die Kanaleigenschaften und damit die Kanalzustände nur langsam verändern. Demzufolge werden bei dem vorliegenden Ausführungsbeispiel die in einer Trainingssequenz 32 enthaltenen Kanalzustandsinformationen auch aus einer vorherigen Nachricht 3, insbesondere Trainingssequenz 32, wiederverwendet. Hierfür wird auf die Speichereinrichtung 112 zugegriffen, in welcher die vorangehenden empfangenen Trainingssequenzen 32 und/oder die daraus ermittelten Kanalzustandsinformationen, insbesondere die Kanalimpulsantwort h(t), gespeichert sind. Gespeichert werden jeweils die Informationen, an welchen die jeweilige Teilnehmerstation der Teilnehmerstationen 11 bis 19 interessiert ist. Dadurch kann die zeitliche Kapazität des Bussystems 1 durch Verzicht auf erneute Aussendung einer Trainingssequenz 32 eingespart werden.

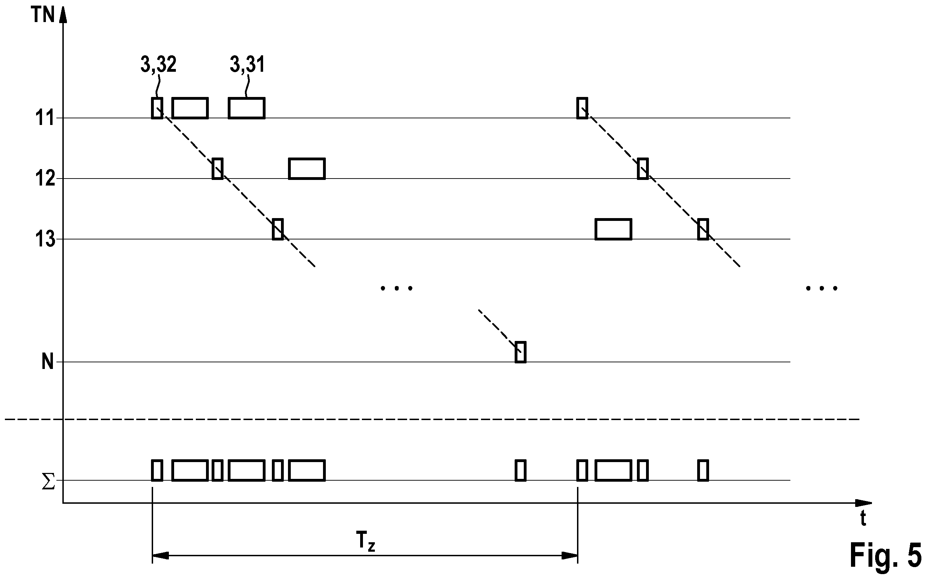

Gemäß Fig. 5 werden daher bei dem vorliegenden Ausführungsbeispiel von den einzelnen Teilnehmerstationen 11 bis 19 regelmäßig Trainingssequenzen 32 ausgesendet. In Fig. 5 ist die zeitliche Aussendereihenfolge der Trainingssequenzen 32 und der Datenrahmen 31 für die Teilnehmerstationen 11, 12, 13 ... N als Beispiel gezeigt. Somit werden mit regelmäßig wiederkehrenden Zeitabständen, also zyklisch, Trainingssequenzen 32 aller Teilnehmerstationen 11 bis 19 in Form von separaten Rahmen oder Nachrichten 3 ausgesendet. Die Aussendung der Datenrahmen 31 erfolgt dagegen unabhängig von den Informationen der zugehörigen Trainingssequenz 32. Demzufolge erfolgt die Aussendung der Datenrahmen 31 ohne zusätzliche Informationen im Rahmen, die in der Trainingssequenz 32 enthalten sind. Die Summen-Darstellung ∑ in Fig. 5 zeigt die Gesamtbelegung des parallelen Busses auf der Busleitung 10 des Bussystems 1.

Besonders in einem Netzwerk mit nur wenigen Teilnehmern bzw. Teilnehmerstationen wie bei dem Bussystem 1 wird durch dieses Verfahren die benötigte Zeit zur Schätzung der Kanalimpulsantworten h(t) deutlich verkürzt und damit die Nettodatenrate des Gesamtsystems erhöht.

Ein weiterer Vorteil ist, dass bei dem vorliegenden Ausführungsbeispiel die Aussendung der Trainingssequenzen 32 teilnehmerabhängig und nicht mehr nachrichtenabhängig übertragen werden kann.

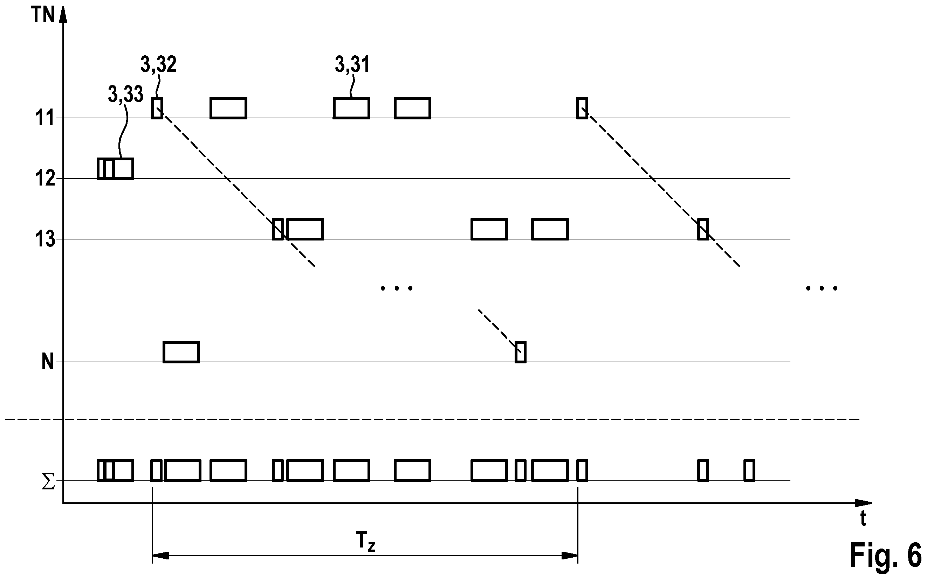

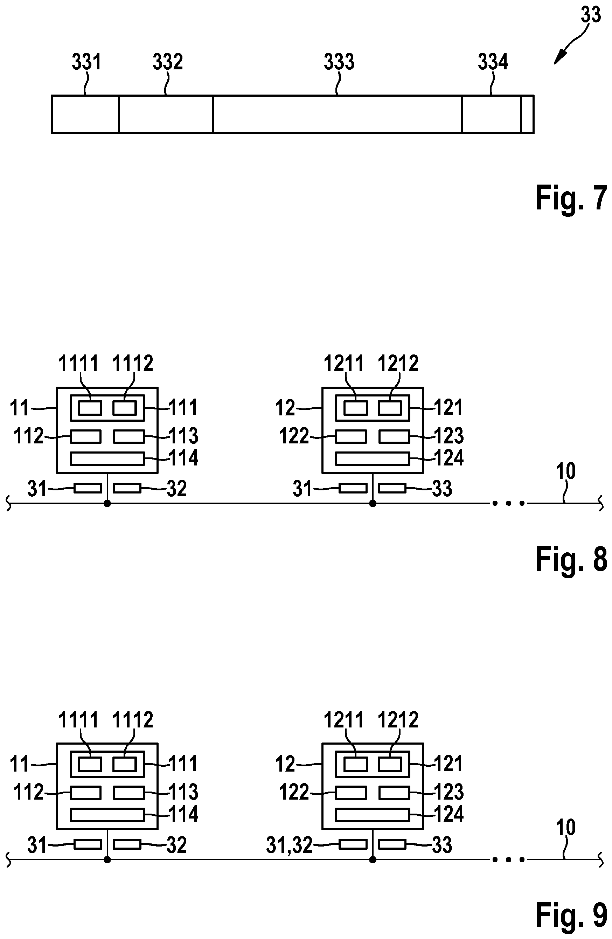

Fig. 6 zeigt einen Datenverkehr in einem Bussystem 1 gemäß einem zweiten Ausführungsbeispiel. Hier wird für die Sicherstellung von aktuellen Kanalzustandsinformationen zu jeder Zeit in jedem Empfänger ein sporadisches Senden von ergänzten Datenrahmen 33 ausgeführt, welche einen um eine Trainingssequenz 332 ergänzten Datenrahmen 33 aufweisen, wie in Fig. 7 veranschaulicht. Die Trainingssequenz 332 kann hierbei nach einem Rahmenkopf 331 und vor einem Datenteil 333 eingefügt sein oder an einer beliebigen Stelle im Datenteil 333 des Datenrahmens 31 eingefügt sein. Dem Datenteil 333 folgt ein Rahmenende 334.

Wie in Fig. 6 dargestellt, kann das sporadische Senden von ergänzten Datenrahmen 33 durch eine Teilnehmerstation, beispielsweise die Teilnehmerstation 12, durch zyklisches Senden von separater Trainingssequenz 32 und separatem Datenrahmen 31 durch die anderen Teilnehmerstationen 11 und 13 bis N ergänzt sein. Jedoch gilt auch hier, dass die Teilnehmerstation 12 die Kanalzustandsinformationen nicht in jeder Nachricht 3 zu senden hat. Daher kann die Teilnehmerstation 12, wenn bereits vor einer vorbestimmten Zeit ein ergänzter Datenrahmen 33 als Nachricht 3 ausgesandt wurde, als nächstes erst wieder einen Datenrahmen 31, also Daten ohne Trainingssequenz 332 aussenden.

Damit kann bei dem vorliegenden Ausführungsbeispiel die notwendige Trainingssequenz 32 z.B. zyklisch über dedizierte CAN-Rahmen übertragen werden, wie für die Teilnehmerstationen 11 und 13 bis N gezeigt. Im Unterschied dazu wird jedoch von der Teilnehmerstation 12 die notwendige Trainingssequenz 332 sporadisch als optionale Ergänzung in einen CAN-Rahmen bzw. ergänzten Datenrahmen 33 eingefügt. Die Ergänzung erfolgt somit je nach Bedarf, was insbesondere nicht zyklisch ist. Hierfür wird beispielsweise über eine Kennung (Flag) im CAN-Rahmenkopf 331 eine entsprechende Ankündigung an die empfangende Teilnehmerstation der Teilnehmerstationen 11 und 13 bis N gegeben. Die Summen-Darstellung ∑ in Fig. 6 zeigt die Gesamtbelegung des parallelen Busses des Bussystems 1.

Die Trainingssequenz 332 gemäß Fig. 7 ist also bei dem vorliegenden Ausführungsbeispiel keine separate Nachricht 3 mit eigenem Rahmenkopf und Rahmenende sondern enthält nur die zur Bestimmung der Kanalzustandsinformationen benötigten Informationen aus dem Datenteil der Trainingssequenz 32 gemäß dem ersten Ausführungsbeispiel. Auch hier hat zumindest das Datenfeld 331, gegebenenfalls jedoch auch die Trainingssequenz 332, ein hochratiges Datenformat, um Daten gemäß der Spezifikation für CAN-FD oder mit einer noch höheren Datenübertragungsrate zu übertragen. Hat auch die Trainingssequenz 332 ein hochratiges Datenformat, kann die Nettodatenrate im Bussystem weiter gesteigert werden.

Fig. 8 zeigt den daraus folgenden Aufbau der Teilnehmerstation 12. Die Teilnehmerstation 12 hat eine Kommunikationssteuereinrichtung 121, eine Speichereinrichtung 122, eine Korrektureinrichtung 123 und eine Sende-/Empfangseinrichtung 124. Die Kommunikationssteuereinrichtung 121 weist eine Datenrahmenerstelleinrichtung 1211 zur Erstellung einer einzelnen Nachricht 3 als ergänzten Datenrahmen 33 in Form eines Signals für die Busleitung 10 auf. In den Datenrahmen 33 ist eine von der Trainingssequenzerstelleinrichtung 1212 erstellte Trainingssequenz 332 eingebettet, wie zuvor beschrieben.

Ansonsten ist das Bussystem gemäß dem vorliegenden Ausführungsbeispiel aufgebaut wie das Bussystem 1 gemäß dem ersten Ausführungsbeispiel.

Somit senden bei dem vorliegenden Ausführungsbeispiel die Teilnehmerstationen 11 und 13 bis N zyklische Trainingssequenzen 32 in Form von separaten Rahmen aus, wohingegen die Teilnehmerstation 12 eine sporadische Trainingssequenz in einen CAN-Rahmen, den ergänzten Datenrahmen 33, einbettet.

Auch die Konfiguration gemäß dem vorliegenden Ausführungsbeispiel ist in einem Netzwerk mit nur wenigen Teilnehmern wie bei dem Bussystem 1 gemäß dem ersten Ausführungsbeispiel vorteilhaft, da auch durch das vorliegende Verfahren die benötigte Zeit zur Schätzung der Kanalimpulsantworten h(t) deutlich verkürzt wird. Auch hier kann die Aussendung der Trainingssequenzen 32 zumindest für die Teilnehmerstationen 11 und 13 bis N, aber auch für die Teilnehmerstation 12, teilnehmerabhängig und nicht mehr nachrichtenabhängig übertragen werden.

Gemäß Fig. 9 kann die Teilnehmerstation 12 bei einem dritten Ausführungsbeispiel entweder eine sporadische Trainingssequenz in einen Rahmen 33 einbetten, wie bei dem zweiten Ausführungsbeispiel beschrieben, oder sporadisch einzelne Trainingssequenzen 32 und einzelne Datenrahmen 31 als separate Rahmen aussenden, wie bei dem ersten Ausführungsbeispiel beschrieben. Ansonsten ist das Bussystem gemäß dem vorliegenden Ausführungsbeispiel aufgebaut wie das Bussystem 1 gemäß dem ersten Ausführungsbeispiel.

Dadurch kann auch bei dem vorliegenden Ausführungsbeispiel, wie bei dem ersten Ausführungsbeispiel, die Aussendung der Trainingssequenzen 32, 332 für alle Teilnehmerstationen 11 bis N teilnehmerabhängig und nicht nachrichtenabhängig übertragen werden.

Alle zuvor beschriebenen Ausgestaltungen des Bussystems 1, der Teilnehmerstationen 11 bis 19 und des Verfahrens können einzeln oder in allen möglichen Kombinationen Verwendung finden. Insbesondere können alle Merkmale der zuvor beschriebenen Ausführungsbeispiele beliebig kombiniert werden. Zusätzlich sind insbesondere folgende Modifikationen denkbar.

Das zuvor beschriebene Bussystem 1 gemäß den Ausführungsbeispielen ist anhand eines auf dem CAN-Protokoll basierenden Bussystems beschrieben. Das Bussystem 1 gemäß den Ausführungsbeispielen kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 11 bis 19 auf einen gemeinsamen Kanal gewährleistet ist.

Das Bussystem 1 gemäß den Ausführungsbeispielen ist insbesondere ein CAN-Netzwerk oder ein TTCAN-Netzwerk oder ein CAN FD-Netzwerk.

Die zyklische Aussendung von Trainingssequenzen 32 kann in geblockter Form erfolgen, so dass alle Teilnehmerstationen 11 bis 19 Ihre Trainingssequenzen 32, in entsprechenden Rahmen, zeitlich koordiniert in einem festen Schema, insbesondere synchron, aber zeitlich versetzt, versenden.

Jede Teilnehmerstationen 11 bis 19 kann ihre Nachrichten 3 auch asynchron zu anderen Teilnehmerstation(en) der Teilnehmerstationen 11 bis 19 versenden und den Zeitpunkt nach einem eigenen Schema festlegen, z.B. über Zeitgeber (Timer) mit Zeitüberschreitungsfunktion (Timeout-Funktion).

Die Verwendung von zyklischen und sporadischen (bzw. im CAN-Rahmen eingebetteten) Trainingssequenzen 32, 332 kann teilnehmer- bzw. teilnehmerstationsabhängig definiert werden, so dass eine Optimierung der Übertragungseffizienz, insbesondere im Sinne möglichst geringem Overhead-Anteil, der durch Rahmenkopf 3-1, 331 und Rahmenende 3-3, 334 entsteht, erreicht wird.

Die Trainingssequenzen 32, 332 können mathematisch für die Bestimmung der Kanalzustandsinformation bzw. Kanalimpulsantwort optimiert werden, besonders hinsichtlich der eingesetzten Länger der Sequenz 32, 332. Alternativ können bekannte Sequenzen, wie Pseudo-Noise, Gold-Codes, Walsh-Codes, Kasami-Codes, Barker-Codes, usw., eingesetzt werden.

Für die Aussendung von separaten bzw. dedizierten Rahmen als Trainingssequenzen 32, die keine weitere Dateninhalte umfassen, können zur Priorisierung in dem Bussystem 1 bestimmte Prioritäten zugeordnet werden. Unter anderem sollte die Priorität einer Trainingssequenz 32 höher gewählt werden als die Priorität aller von einer Teilnehmerstation 11 bis 19 ausgesendeten Nachrichten 3 gewählt werden.

Die Trainingssequenzen 32, 332 können neben der Bestimmung der Kanalimpulsantwort h(t) auch zur Bestimmung von Störgrößen benutzt werden. Hierbei kann besonders das Signal-zu-Geräusch-Verhältnis (Signal-to-Noise Ratio (SNR)) bestimmt werden. Aus diesem kann ein Empfänger erkennen, ob evtl. ein Rauschpegel vorliegt, bei dem ein Empfang nicht mehr gewährleistet werden kann.

Durch die regelmäßige Beobachtung von Kanaleigenschaften anhand von Kanalimpulsantworten h(t) kann diese zur Erkennung von Veränderungen in den Netzwerkeigenschaften des Bussystems 1 herangezogen werden. Besonders kann ein nicht-erlaubter Eingriff auf das Netzwerk des Bussystems 1 z.B. durch Anschalten zusätzlicher Teilnehmerstationen der Teilnehmerstationen 11 bis 19 detektiert werden.

Eine Verwendung von bidirektionalen Kanalimpulsantworten h(t) kann zur Generierung von Schlüsseln zum Verschlüsseln von Nachrichten, welche einen Schutz der Vertraulichkeit bietet, auf beiden Seiten benutzt werden. Betrachtet man beispielsweise die zwei Teilnehmerstationen 14, 15, welche verschlüsselt miteinander kommunizieren möchten, so liegt nach einem Zyklus die aktuelle Kanalimpulsantwort h(t) bei beiden Teilnehmerstationen 14, 15 vor. Die aktuelle Kanalimpulsantwort h(t) kann zur Generierung eines Schlüssels (Physical Key Generation) verwendet werden, welcher sonst keiner anderen Teilnehmerstation bekannt ist, da die anderen Teilnehmerstationen andere Kanalimpulsantworten h(t) sehen.

Die Anzahl und Anordnung der Teilnehmerstationen 11 bis 19 in dem Bussystem 1 der Ausführungsbeispiele ist beliebig. Insbesondere können auch nur Teilnehmerstationen 11 oder Teilnehmerstationen 12 usw. in dem Bussystem 1 der Ausführungsbeispiele vorhanden sein.

Die Partitionierung der zuvor beschriebenen Funktionalität der Datenrahmenerstelleinrichtung 1111 und der Trainingssequenzerstelleinrichtung 1112 in einer Kommunikationseinrichtung 11 kann auch derart realisiert sein, dass die zuvor beschriebene Funktionalität auf mehrere Bausteine verteilt ist. Hierdurch kann eine möglichst ähnliche Ausführung entsprechend bisherigen CAN-Controllern und CAN-Transceivern angestrebt werden. Für die Verbindung mehrerer Bausteine sind analoge wie digitale Schnittstellen einsetzbar.

Die Teilnehmerstationen 11 bis 19 stellen besonders für CAN-FD und Systeme mit höheren Datenraten eine Möglichkeit dar, die Empfangsgüte von CAN-FD und dieser Systeme in den Bereich von üblichen CAN Übertragungen bei Nutzung einer deutlich höheren Datenrate anzuheben.

Das in den Teilnehmerstationen 11 bis 19 ausgeführte Verfahren lässt sich, beispielsweise in einem Transceiver bzw. einer Sende-/Empfangseinrichtung 114, in einer Kommunikationssteuereinrichtung 111, usw. umsetzen. Zusätzlich oder alternativ kann es in existierende Produkte integriert werden.

## Patentansprüche

1. Teilnehmerstation (11; 12) für ein Bussystem (1), mit
einer Kommunikationssteuereinrichtung (111; 121) zum Erstellen oder Lesen zumindest einer Nachricht (3; 31, 32; 33; 31, 33) für/von mindestens eine/r weiteren Teilnehmerstation des Bussystems (1), bei welchem zumindest zeitweise ein exklusiver, kollisionsfreier Zugriff einer Teilnehmerstation (11 bis 19) auf eine Busleitung (10) des Bussystems (1) gewährleistet ist,
wobei die Kommunikationssteuereinrichtung (111; 121) ausgestaltet ist, aus dem Empfangssignal einer empfangenen Trainingssequenz (32;332) Kanalzustandsinformationen zu bestimmen oder zu schätzen und in einer Speichereinrichtung (112; 122) zu speichern,
wobei die in der empfangenen Trainingssequenz (32; 332) enthaltenen Kanalzustandsinformationen auch aus einer vorherigen Trainingssequenz wiederverwendet werden, indem auf die Speichereinrichtung (112; 122) zugegriffen wird, in welcher die vorangehenden empfangenen Trainingssequenzen (32;332) und/oder die daraus ermittelten Kanalzustandsinformationen gespeichert sind,
wobei die Kanalzustandsinformationen Informationen zur Bestimmung der Kanalcharakteristik zwischen der Teilnehmerstation (11; 12) und der weiteren Teilnehmerstation (12 bis 19; 11, 13 bis 19) des Bussystems (1) umfassen, an welche die Nachricht (3; 31, 32; 33; 31, 33) zu senden ist,
wobei die Kommunikationssteuereinrichtung (111) zudem ausgestaltet ist zur Erstellung einer Trainingssequenz (32; 332) innerhalb einer vorbestimmten Zykluszeit (T_{Z}), um zu realisieren, dass innerhalb dieser vorbestimmten Zykluszeit (T_{Z}) für alle Teilnehmerstationen (11 bis 19) des Bussystems (1) einmal die Trainingssequenz (32; 332) ausgesendet wird.

2. Teilnehmerstation (11; 12) nach Anspruch 1, **dadurch gekennzeichnet, dass** die Trainingssequenz (32; 332) als separater Rahmen ausgesendet wird.

3. Teilnehmerstation (11; 12) nach Anspruch 1 oder 2, zudem mit
einer Korrektureinrichtung (113) zur Korrektur der gelesenen Nachricht (3; 31, 32; 33; 31, 33) anhand der Kanalzustandsinformationen.

4. Teilnehmerstation (11; 12) nach Anspruch 3,
wobei die Korrektureinrichtung (113) ausgestaltet ist, die Kanalzustandsinformationen aus der Trainingssequenz (32; 332) der Nachricht (3; 33) zu beschaffen, oder aus der Speichereinrichtung (112) zu beschaffen, wenn die Nachricht (3; 33) keine Trainingssequenz (32; 332) umfasst.

5. Teilnehmerstation (11) nach einem der vorangehenden Ansprüche,
wobei die Nachricht (3) neben einem Rahmenkopf (3-1) und einem Rahmenende (3-3) nur die Trainingssequenz (32) als Datenteil (3-2) aufweist, oder
wobei die Trainingssequenz (332) in einen Datenrahmen (33) als Nachricht (3) eingebettet ist.

6. Bussystem (1), mit
einer parallelen Busleitung (10), und
mindestens zwei Teilnehmerstationen (11 bis 19), welche über die Busleitung (10) derart miteinander verbunden sind, dass sie miteinander kommunizieren können,
wobei mindestens eine der mindestens zwei Teilnehmerstationen (11 bis 19) eine Teilnehmerstation (11; 12) nach einem der vorangehenden Ansprüche ist.

7. Verfahren zur breitbandigen Kommunikation in einem Bussystem (1), mit den Schritten:
Lesen, mit einer Kommunikationssteuereinrichtung (111; 121), zumindest einer Nachricht (3; 31, 32; 33; 31, 33) für/von mindestens eine/r weiteren Teilnehmerstation des Bussystems (1), bei welchem zumindest zeitweise ein exklusiver, kollisionsfreier Zugriff einer Teilnehmerstation (11 bis 19) auf eine Busleitung (10) des Bussystems (1) gewährleistet ist,
Bestimmen oder Schätzen von Kanalzustandsinformationen, durch die Kommunikationssteuereinrichtung, aus dem Empfangssignal einer empfangenen Trainingssequenz (32; 332),
Speichern der Kanalzustandsinformationen in einer Speichereinrichtung (112;122),
Wiederverwenden von in der empfangenen Trainingssequenz enthaltenen Kanalzustandsinformationen auch aus einer vorherigen Trainingssequenz, indem auf die Speichereinrichtung (112; 122) zugegriffen wird, in welcher die vorangehenden empfangenen Trainingssequenzen (32;332) und/oder die daraus ermittelten Kanalzustandsinformationen gespeichert sind,
wobei die Kanalzustandsinformationen Informationen zur Bestimmung der Kanalcharakteristik zwischen der Teilnehmerstation (11; 12) und der weiteren Teilnehmerstation (12 bis 19; 11, 13 bis 19) des Bussystems (1) umfassen, an welche die Nachricht (3; 31, 32; 33; 31, 33) zu senden ist,
Erstellen, durch die Kommunikationssteuereinrichtung, einer Trainingssequenz (32; 332) innerhalb einer vorbestimmten Zykluszeit (T_{Z}), um zu realisieren, dass innerhalb dieser vorbestimmten Zykluszeit (T_{Z}) für alle Teilnehmerstationen (11 bis 19) des Bussystems (1) einmal die Trainingssequenz (32; 332) ausgesendet wird.

## Claims

1. Subscriber station (11; 12) for a bus system (1), having
a communication control device (111; 121) for creating or reading at least one message (3; 31, 32; 33; 31, 33) for/from at least one further subscriber station of the bus system (1), during which exclusive, collision-free access of a subscriber station (11 to 19) to a bus line (10) of the bus system (1) is at least occasionally guaranteed,
wherein the communication control device (111; 121) is configured to determine or estimate channel status information from the reception signal of a received training sequence (32; 332) and to store said information in a storage device (112; 122),
wherein the channel status information contained in the received training sequence (32; 332) is also reused from a previous training sequence by accessing the storage device (112; 122) in which the previous received training sequences (32; 332) and/or the channel status information determined therefrom is/are stored,
wherein the channel status information comprises information for determining the channel characteristic between the subscriber station (11; 12) and the further subscriber station (12 to 19; 11, 13 to 19) of the bus system (1), to which the message (3; 31, 32; 33; 31, 33) is to be transmitted,
wherein the communication control device (111) is also configured to create a training sequence (32; 332) within a predetermined cycle time (T_{Z}) such that the training sequence (32; 332) is emitted once for all subscriber stations (11 to 19) of the bus system (1) within this predetermined cycle time (T_{Z}).

2. Subscriber station (11; 12) according to Claim 1, **characterized in that** the training sequence (32; 332) is emitted as a separate frame.

3. Subscriber station (11; 12) according to Claim 1 or 2, also having
a correction device (113) for correcting the read message (3; 31, 32; 33; 31, 33) on the basis of the channel status information.

4. Subscriber station (11; 12) according to Claim 3,
wherein the correction device (113) is configured to obtain the channel status information from the training sequence (32; 332) of the message (3; 33) or to obtain it from the storage device (112) if the message (3; 33) does not comprise a training sequence (32; 332).

5. Subscriber station (11) according to one of the preceding claims,
wherein, in addition to a frame header (3-1) and a frame end (3-3), the message (3) has only the training sequence (32) as a data part (3-2), or
wherein the training sequence (332) is embedded in a data frame (33) as a message (3).

6. Bus system (1) having
a parallel bus line (10), and
at least two subscriber stations (11 to 19) which are connected to one another via the bus line (10) in such a manner that they can communicate with one another,
wherein at least one of the at least two subscriber stations (11 to 19) is a subscriber station (11; 12) according to one of the preceding claims.

7. Method for broadband communication in a bus system (1), having the steps of:
using a communication control device (111; 121) to read at least one message (3; 31, 32; 33; 31, 33) for/from at least one further subscriber station of the bus system (1), during which exclusive, collision-free access of a subscriber station (11 to 19) to a bus line (10) of the bus system (1) is at least occasionally guaranteed,
using the communication control device to determine or estimate channel status information from the reception signal of a received training sequence (32; 332),
storing the channel status information in a storage device (112; 122),
also reusing channel status information contained in the received training sequence from a previous training sequence by accessing the storage device (112; 122) in which the previous received training sequences (32; 332) and/or the channel status information determined therefrom is/are stored,
wherein the channel status information comprises information for determining the channel characteristic between the subscriber station (11; 12) and the further subscriber station (12 to 19; 11, 13 to 19) of the bus system (1), to which the message (3; 31, 32; 33; 31, 33) is to be transmitted,
using the communication control device to create a training sequence (32; 332) within a predetermined cycle time (T_{Z}) such that the training sequence (32; 332) is emitted once for all subscriber stations (11 to 19) of the bus system (1) within this predetermined cycle time (T_{Z}).

## Revendications

1. Poste utilisateur (11 ; 12) pour un système de bus (1), comprenant
un dispositif de commande de communication (111 ; 121) pour rédiger ou lire au moins un message (3 ; 31, 32 ; 33 ; 31, 33) destiné à/en provenance d'au moins un poste utilisateur supplémentaire du système de bus (1) dans lequel un accès exclusif sans collision d'un poste utilisateur (11 à 19) à une ligne de bus (10) du système de bus (1) est assuré au moins temporairement,
dans lequel le dispositif de commande de communication (111 ; 121) est configuré pour déterminer ou estimer des informations d'état de canal à partir du signal de réception d'une séquence d'apprentissage reçue (32 ; 332) et pour les stocker dans un dispositif de stockage (112 ; 122),
dans lequel les informations d'état de canal contenues dans la séquence d'apprentissage reçue (32 ; 332) provenant également d'une séquence d'apprentissage précédente sont réutilisées par un accès au dispositif de stockage (112 ; 122) dans lequel sont stockées les séquences d'apprentissage (32 ; 332) reçues précédentes et/ou les informations d'état de canal déterminées à partir de celles-ci,
dans lequel les informations d'état de canal comprennent des informations pour déterminer la caractéristique de canal entre le poste utilisateur (11 ; 12) et le poste utilisateur supplémentaire (12 à 19 ; 11, 13 à 19) du système de bus (1) auquel le message (3 ; 31, 32 ; 33 ; 31, 33) doit être envoyé,
dans lequel le dispositif de commande de communication (111) est en outre configuré pour créer une séquence d'apprentissage (32 ; 332) dans un temps de cycle prédéterminé (T_{Z}) afin d'obtenir que dans ce temps de cycle prédéterminé (T_{Z}), la séquence d'apprentissage (32 ; 332) soit émise une seule fois pour tous les postes utilisateurs (11 à 19) du système de bus (1).

2. Poste utilisateur (11 ; 12) selon la revendication 1, **caractérisé en ce que** la séquence d'apprentissage (32 ; 332) est émise sous forme de trame séparée.

3. Poste utilisateur (11 ; 12) selon la revendication 1 ou 2, comprenant en outre un dispositif de correction (113) pour corriger le message lu (3 ; 31, 32 ; 33 ; 31, 33) à l'aide des informations d'état de canal.

4. Poste utilisateur (11 ; 12) selon la revendication 3, dans lequel le dispositif de correction (113) est configuré pour acquérir les informations d'état de canal à partir de la séquence d'apprentissage (32 ; 332) du message (3 ; 33) ou à partir du dispositif de stockage (112) si le message (3 ; 33) ne comprend aucune séquence d'apprentissage (32 ; 332).

5. Poste utilisateur (11) selon l'une quelconque des revendications précédentes,
dans lequel le message (3) présente en plus d'un en-tête de trame (3-1) et d'une fin de trame (3-3) uniquement la séquence d'apprentissage (32) sous forme de partie de données (3-2), ou
dans lequel la séquence d'apprentissage (332) est incorporée dans une trame de données (33) sous forme de message (3).

6. Système de bus (1), comprenant
une ligne de bus parallèle (10), et
au moins deux postes utilisateurs (11 à 19) qui sont reliés par la ligne de bus (10) de telle sorte qu'ils peuvent communiquer l'un avec l'autre,
dans lequel au moins l'un des au moins deux postes utilisateurs (11 à 19) est un poste utilisateur (11 ; 12) selon l'une quelconque des revendications précédentes.

7. Procédé de communication à large bande dans un système de bus (1), comprenant les étapes consistant à :
lire, par un dispositif de commande de communication (111 ; 121), au moins un message (3 ; 31, 32 ; 33 ; 31, 33) à destination/en provenance d'au moins un poste utilisateur supplémentaire du système de bus (1), dans lequel un accès exclusif sans collision, d'un poste utilisateur (11 à 19) à une ligne de bus (10) du système de bus (1), est assuré au moins temporairement,
déterminer ou estimer des informations d'état de canal, par le dispositif de commande de communication, à partir du signal de réception d'une séquence d'apprentissage (32 ; 332) reçue,
stocker les informations d'état de canal dans un dispositif de stockage (112 ; 122),
réutiliser des informations d'état de canal comprises dans la séquence d'apprentissage reçue provenant d'une séquence d'apprentissage précédente par un accès au dispositif de stockage (112 ; 122) dans lequel sont stockées les séquences d'apprentissage reçues précédentes (32 ; 332) et/ou les informations d'état de canal déterminées à partir de celles-ci,
dans lequel les informations d'état de canal comprennent des informations pour déterminer la caractéristique de canal entre le poste utilisateur (11 ; 12) et le poste utilisateur supplémentaire (12 à 19 ; 11, 13 à 19) du système de bus (1) auquel le message (3 ; 31, 32 ; 33 ; 31, 33) doit être envoyé,
créer, par le dispositif de commande de communication, une séquence d'apprentissage (32 ; 332) dans un temps de cycle prédéterminé (T_{Z}) afin d'obtenir que dans ce temps de cycle prédéterminé (T_{Z}), la séquence d'apprentissage (32 ; 332) soit émise une seule fois pour tous les postes utilisateurs (11 à 19) du système de bus (1).
